## Europäisches Patentamt

## European Patent Office

## Office européen des brevets

(11) Veröffentlichungsnummer: **0 071 957**
**B1**

(12) **EUROPÄISCHE PATENTSCHRIFT**

(45) Veröffentlichungstag der Patentschrift:
05.11.86

(51) Int. Cl.⁴: **C 08 F 10/00,** C 08 F 4/64

(21) Anmeldenummer: **82106995.2**

(22) Anmeldetag: **03.08.82**

(54) Verfahren zum Polymerisieren von 1-Olefinen und Verfahren zur Herstellung des dabei verwendeten Katalysators.

(30) Priorität: **07.08.81 DE 3131369**
**27.03.82 DE 3211394**

(43) Veröffentlichungstag der Anmeldung:
**16.02.83 Patentblatt 83/7**

(45) Bekanntmachung des Hinweises auf die Patenterteilung:
**05.11.86 Patentblatt 86/45**

(84) Benannte Vertragsstaaten:
**BE DE FR GB IT NL**

(56) Entgegenhaltungen:
EP-A-0 004 789
DE-A-2 153 520
DE-A-2 643 143

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT,**
**Postfach 80 03 20, D-6230 Frankfurt am Main 80 (DE)**

(72) Erfinder: **Lehr, Karl- Heinz, Dr., Johannesallee 28, D-6230 Frankfurt am Main 80 (DE)**

**0 071 957**

## Beschreibung

Die vorliegende Erfindung betrifft ein Verfahren zum Polymerisieren von 1-Olefinen, welches Polymere in sehr hoher Ausbeute liefert, bei welchem also auf eine Entfernung der Katalysatorreste aus dem Polymeren verzichtet werden kann.

In zahlreichen Druckschriften sind Verfahren zur Polymerisation von 1-Olefinen zu überwiegend kristallinen Polymeren unter Verwendung bestimmter, auf Trägern aufgebrachter Katalysatoren beschrieben worden.

Es sind Katalysatoren bekannt, die durch trocknes Mahlen von Magnesium- bzw. Manganhalogeniden mit Titantetrahalogenid-Elektronendonator-Komplexen in Abwesenheit von Verdünnungsmitteln hergestellt werden und zusammen mit Aluminiumalkylen zur Polymerisation von Propylen eingesetzt werden (vgl. DE-OS 2 230 672). Die Stereospezifität dieser Katalysatoren ist allerdings noch unbefriedigend und die Kontaktausbeuten sind nicht hoch genug, um die Katalysatorreste im Polymeren belassen zu können.

Weiterhin ist ein Katalysatorsystem bekannt, welches die Polymerisation von Propylen mit sehr guter Ausbeute und hohem isotaktischem Anteil ermöglicht (vgl. DE-OS 2 643 143). Magnesiumchlorid wird mit einer Elektronendonatorverbindung, insbesondere mit einem Ester ·einer aromatischen Carbonsäure, wie Benzoesäureethylester, gemahlen. Das Mahlgut wird mit einer größeren Menge Titantetrachlorid umgesetzt. Die so gewonnene Katalysatorkomponente wird mit einem Kohlenwasserstoff gut ausgewaschen. Als Aktivator wird ein Aluminiumtrialkyl in Kombination mit einem Ester einer aromatischen Carbonsäure wie zum Beispiel 4-Methylbenzoesäuremethylester eingesetzt. Nachteilig ist bei diesem Katalysatorsystem die Notwendigkeit des Arbeitens mit großen Titantetrachloridmengen, obwohl nur eine kleine Menge Titan fixiert wird, und der Anfall einer noch größeren Menge an titantetrachloridhaltiger Kohlenwasserstof-Waschlauge. Weiter enthält das mit diesem Katalysatorsystem erhaltene Polypropylen verhältnismäßig große Mengen an Feinkornanteilen unter 100µm.

Ebenso ist ein Verfahren zur Herstellung eines Katalysators beschrieben worden, bei welchem das Mahlen von $MgCl_2$ mit einer Elektronendonatorverbindung auch in Gegenwart inerter Kohlenwasserstoffe durchgeführt werden kann (vgl. DE-OS 2 553 104). Die anschließende Behandlung mit Titantetra — chlorid mit nachfolgenden Kohlenwasserstoff-Wäschen ist wiederum mit dem Anfall von überschüssigem Titantetrachlorid und titantetrachloridhaltigen Waschlaugen verbunden.

Aufgabe der Erfindung was es daher, ein Verfahren zum Polymerisieren von 1-Olefinen zu finden, welches einerseits ein Polymeres mit ausreichend hohem isotaktischem Anteil, hohem Schüttgewicht und niedrigem Feinkornanteil in so hoher Ausbeute liefert, daß eine Aufbereitung des Polymeren entfallen kann, und welches andererseits bereits bei der Herstellung des zu verwendenden Katalysators einfacher durchzuführen ist.

Es wurde gefunden, daß die Lösung dieser Aufgabe möglich ist, wenn man zunächst ein Magnesiumhalogenid mit einem Elektronendonator mahlt und anschließend die halogenhaltige Titanverbindung zum Mahlgut zusetzt und das Mahlen in Anwesenheit einer definierten Menge eines inerten Lösemittels durchführt, wobei

durch den Zusatz von Modifizierungsmitteln beim Mahlen die Kontaktausbeute des Katalysators bei gleichbleibender Stereospezifität weiter gesteigert werden und umgekehrt bei gleicher Kontaktausbeute die Stereospezifität erheblich verbessert werden kann.

Gegenstand der Erfindung ist somit ein Verfahren zum Polymerisieren von 1-Olefinen der Formel $R^3$-$CH=CH_2$, worin $R^3$ Wasserstoff oder einem Alkylrest mit 1 bis 8 Kohlenstoffatomen bedeutet, oder zum Copolymerisieren dieser 1-Olefine untereinander in Gegenwart eines Mischkatalysators, der hergestellt wurde durch Modifizieren eines Magnesiumhalogenids mit einem Elektronendonator, Inberührungbringen des modifizierten Trägers mit einer halogenhaltigen Titanverbindung und Mischen der so gewonnenen Katalysatorkomponente A mit einer halogenfreien aluminiumorganischen Verbindung (Komponente B) und einem Stereoregulator (Komponente C), das dadurch gekennzeichnet ist, daß man die Polymerisation in Gegenwart eines Mischkatalysators durchführt, dessen Komponente A in der Weise hergestellt wurde, daß zunächst das Magnesiumhalogenid mit dem Elektronendonator 1 bis 100 Stunden vermahlen wurde, wobei das Molverhältnis 40:1 bis 5:1 betrug, sodann eine chlorhaltige Titanverbindung zugesetzt und der Ansatz weitere 5 bis 100 Stunden vermahlen wurde, wobei dem Mahlgut 1 bis 20 Gew.-%, bezogen auf die Gesamtmenge des Mahlgutes, eines inerten Kohlenwasserstoffs zugesetzt wurde.

Gegenstand der Erfindung ist ebenso der für dieses Verfahren zu verwendende Mischkatalysator und seine Herstellung.

Der erfindungsgemäß zu verwendende Mischkatalysator besteht aus

A) einer titanhaltigen Katalysatorkomponente, die als rieselfähiges Mahlgut aus einem Magnesiumhalogenid, einem Elektronendonator und einer chlorhatigen Titanverbindung erhalten wurde,

B) einer aluminiumorganischen Verbindung und

C) einem Stereoregulator.

Zur Herstellung der Katalysatorkomponente A wird zunächst ein Magnesiumhalogenid mit einer Elektronendonatorverbindung im molaren Verhältnis 40:1 bis 5:1, vorzugsweise 20:1 bis 10:1, in einer Mühle 1 bis 100, vorzugsweise 3 bis 10 Stunden gemahlen. Für das Mahlen geeignet sind alle Mühlen, die ausreichend mechanische Energie auf das Mahlgut übertragen können, beispielsweise Kugelschwingmühlen. Sodann wird die 2 bis 0,25-fache, vorzugsweise 1 bis 0,5-fache Menge, bezogen auf die Menge der Elektronendonatorverbindung, einer chlorhaltigen Titanverbindung zugesetzt und weitere 5 bis 100, vorzugsweise 20 bis 60 Stunden gemahlen. Dem Mahlgut werden 1 bis 20, vorzugsweise 5 bis 15 Gew.-%,

2

bezogen auf die Gesamtmenge des Mahlgutes, eines inerten Kohlenwasserstoffes zugegeben. Die Zugabe des Kohlenwasserstoffes kann zu jeder Zeit des Mahlvorganges erfolgen, beispielsweise zusammen mit dem Magnesiumhalogenid, vor, zusammen oder nach dem Elektronendonator oder vor, zusammen oder nach der chlorhaltigen Titanverbindung, vorzugsweise jedoch zusammen mit dem Elektronendonator oder bis zu 10 Stunden danach. Das zu vermahlende Magnesiumhalogenid ist Magnesiumchlorid, Magnesiumdibromid oder Magnesiumdijodid, vorzugsweise Magnesiumdichlorid, welches in der handelsüblichen wasserfreien Form verwendet wird. Ein derartiges Magnesiumchlorid enthält im allgemeinen 0,05 bis 1 Gew.-% Wasser. Als Elektronendonatorverbindung werden Ether, Amide, Amine, Ester, Ketone, Nitrile, Phosphine, Phosphinsäureester, Phosphoramide, Thioether oder Thioester eingesetzt. Die verwendeten Elektronendonatorverbindungen sollen jedoch keinen an Sauerstoff, Stickstoff oder Schwefel gebundenen Wasserstoff enthalten. Geeignete Elektronendonatorverbindungen sind beispielsweise Diethylether, Dioxan, Anisol, Dimethylacetamid, Tetramethyethylendiamin, Essigsäureethylester, Aceton, Acetophenon, Acetonitril, Benzonitril, Triethylphosphin, Triphenylphosphin, Methylethylphosphinsäureisobutylester oder Hexamethylphosphorsäuretrisamid. Bevorzugt werden als Elektronendonatorverbindungen Ester von aromatischen Carbonsäuren wie Benzoesäureethylester, Benzoesäuremethylester, p-Toluylsäuremethylester, Anissäureethylester oder Anissäuremethylester verwendet. Als chlorhaltige Titanverbindung kommen Titantetrachlorid, Titantrichlorid oder Chlortitanester der Formeln $TiCl_2(OR)_2$ und $TiCl_3(OR)$, worin R einen Alkylrest mit 1 bis 8 Kohlenstoffatomen bedeutet, infrage. Vorzugsweise werden Titantetrachlorid und Titantrichlorid eingesetzt.

Als Titantrichlorid können sowohl die Produkte eingesetzt werden, die durch Reduktion von Titantetrachlorid mit Metallen wie Aluminium oder mit metallorganischen Verbindungen erhalten werden, so z.B. ein durch Reduktion von Titantetrachlorid mit Aluminium erhaltenes Produkt der Zusammensetzung 3 $TiCl_3$. $AlCl_3$, das noch durch Mahlen aktiviert sein kann, als auch ein Titantrichlorid, welches durch Reduktion von Titantetrachlorid mit einer aluminiumorganischen Verbindung z.B. der Formel $AlR_3{}^2{}_{-n}X_n$, worin $R^2$ einen Alkylrest mit 1 - 10 Kohlenstoffatomen und X = $R^2$ oder Halogen bedeutet und n = 0 bis 2 ist, gewonnen wird.. Der inerte Kohlenwasserstoff ist eine aliphatische oder aromatische Verbindung oder auch ein Gemisch verschiedener Verbindungen. Beispiele solcher Kohlenwasserstoffe sind n- und i-$C_5$- bis $C_{12}$-Alkane, Dieselölfraktionen, Kerosin, Paraffinöl, Weißöl, Cycloaliphaten; Benzol, Toluol und Ethylbenzol. Die Menge des zugegebenen Kohlenwasserstoffs soll zwar möglichst groß sein, ist aber dadurch begrenzt, daß die Rieselfähigkeit des Mahlgutes erhalten bleiben muß und Klumpenbildung verhindert werden muß. Als vorteilhaft hat sich ein Kohlenwasserstoff-Gehalt im oben angegebenen Rahmen erwiesen. Zum Beispiel wird bei einem Naßmahlen der Komponenten in dem oben erwähnten Kohlenwasserstoff (ca. 100 Gew.-%, bezogen auf übriges Mahlgut) ein deutlicher Abfall des Schüttgewichtes und der Kontaktausbeute beobachtet. Andererseits darf der einmal zugesetzte Kohlenwasserstoff auch nicht wieder entfernt werden, da eine derartige "getrocknete" Katalysatorkomponente bei der Polymerisation zu Produkten mit deutlich reduziertem Schüttgewicht führt.

Das als Modifizierungsmittel zu verwendende Säurehalogenid leitet sich von einem Element der Gruppen III, IVa, Va, IVb und Vb ab. Bevorzugt verwendet werden Halogenide von Al, Si, Sn, P, Sb und Nb insbesondere $AlCl_3$, $SiCl_4$, $SnCl_4$, $PCl_3$, $SbCl_5$ und $NbCl_5$. Diese Säurehalogenide können als solche oder als Komplexe mit Elektronendonatoren, wie sie weiter oben beschrieben sind, eingesetzt werden. Die Menge des Säurehalogenids wird so gewählt, daß das Molverhältnis Halogenid zu Titan 0,1 bis 100, vorzugsweise 0,2 bis 2 beträgt. Der Zeitpunkt der Zugabe des Säurehalogenids während des Mahlens der übrigen Komponenten kann frei gewählt werden. Das Säurehalogenid kann sowohl in flüssiger als auch in fester Form in das Mahlgefäß eingebracht werden. Auch das Mahlen in der Dampfatmosphäre des Säurehalogenids ist möglich.

Die erfindungsgemäße Katalysatorkomponente kann unter Schutzgas sowohl im Festzustand als auch in Suspension über Monate bis zum Einsatz gelagert werden. Vorzugsweise wird die Katalysatorkomponente als Suspension in Dieselöl eingesetzt.

Als halogenfreie aluminiumorganische Verbindung (Komponente B) eignen sich geradkettige und verzweigte Aluminiumalkyle der Formel $AlR_3{}^2$, wobei $R^2$ einen Alkylrest mit 1 bis 10 Kohlenwasserstoffatomen bedeutet, wie z.B. Aluminiumtrimethyl, ALuminiumtriethyl, Aluminiumtriisobutyl, Aluminiumtridiisobutyl. Weiterhin geeignet sind die Reaktionsprodukte von Aluminiumtriisobutyl bzw. Aluminiumdiisobutylhydrid mit Isopren, die unter dem Namen Aluminiumisoprenyl im Handel sind. Besonders geeignet sind Aluminiumtriethyl und Aluminiumtriisobutyl. Das Molverhältnis Katalysatorkomponente B zu Katalysatorkomvonente A liegt im Bereich von 5 bis 600:1.

Die Mischkatalysatorkomponente C ist ein Stereoregulator, der ausgewählt wird aus der Gruppe, die gebildet wird von Cyclopolyenen und Elektronendonatoren wie aromatischen Carbonsäureestern, Phosphinsäureestern, Hexamethylphosphorsäuretrisamid und 1,2-Dimethoxybenzol.

Unter den Cyclopolyene sind bevorzugt Cycloheptatrien-(1,3,5) und Cyclooctatetraen, von den aromatischen Carbonsäureestern werden bevorzugt verwendet Benzoesäuremethylester, Benzoesäureethylester, p-Toluylsäureethylester, p-Toluylsäuremethylester, Anissäureethylester und Anissäuremethylester, von den Phosphinsäureestern der Methylethylphosphinsäureisobutylester. Die Verbindungen können allein oder in Mischung eingesetzt werden, beispielsweise Cycloheptatrien-(1,3,5) und aromatische Carbonsäureester oder Cycloheptatrien-(1,3,5) und Methylphosphinsäureester. Die Komponente C kann mit der Mischkatalysatorkomponente B vor der Polymerisation durch Mischen zur Reaktion gebracht werden, sie kann auch direkt in das Polymerisationsgefäß eingeführt werden. Die Dosierung der Komponenten A, B und C kann auch in der Reihenfolge B-C-A durchgeführt werden, oder auch in der Weise, daß zunächst B und C in einem flüssigen Kohlenwasserstoff gelöst werden, ein Teil dieser Lösung in dem Polymerisationsreaktor eingeführt und der Rest der Lösung der Komponente A zugesetzt und anschließend die Mischung in den Reaktor gegeben wird. Die Menge an Katalysatorkomponente C richtet sich nach der Menge an Katalysatorkomponente B. Das Molverhältnis Komponente B zu Komponente C soll größer als 1:1, vorzugsweise 1,5:1 bis 15:1 sein.

Die 1-Olefine sind solche der Formel $CH_2=CHR^3$, worin $R^3$ = Wasserstoff oder einen Alkylrest mit 1 bis 8 Kohlenstoffatomen bedeutet. Ethylen, Propylen, Buten-(1), Penten-(1), 3-Methylbuten-(1), 4-Methylpenten-(1) und 3-Methylpenten-(1) werden vorzugsweise mit Hilfe des erfindungsgemäßen Katalysators polymerisiert, insbesondere jedoch Propylen. Neben der Homopolymerisation ist der erfindungsgemäße Mischkatalysator auch geeignet für die Polymerisation von Mischungen der höheren 1-Olefine (ab $C_3$) untereinander und/oder mit Ethylen, wobei der Gehalt der Mischung an einem der genannten 1-Olefine 99,6 bis 94 Gew.-% und der Gehalt an Ethylen 0,4 bis 6 Gew.-%, jedesmal bezogen auf die Gesamtmenge der Monomeren, beträgt. Besonders bevorzugt sind Mischungen von Propylen mit kleinen Mengen Ethylen, wobei der Ethylengehalt 0,5 bis 5, vorzugsweise 1,5 bis 3 Gew.-% beträgt. Weiterhin ist der erfindungsgemäße Katalysator zur Blockcopolymerisation dieser 1-Olefine untereinander und/oder mit Ethylen geeignet, wobei der Gehalt an Ethylen 8 bis 35 Gew.-% ist, vorzugsweise zur Herstellung von Blockpolymerisaten aus Propylen und Ethylen. Diese Blockpolymerisate zeichnen sich durch eine hohe Härte und eine ausgezeichnete Schlagzähigkeit bei Temperaturen unter 0°C aus. Die Polymerisation wird kontinuierlich oder diskontinuierlich in Suspension oder in der Gasphase durchgeführt bei einem Druck von 1 bis 50 bar, vorzugsweise 1 bis 40 bar und einer Temperatur von 40 bis 160°C, vorzugsweise 60 bis 90°C.

Die Suspensionspolymerisation wird in einem inerten Lösemittel durchgeführt. Zur Verwendung kommen eine olefinarme Erdölfraktion mit einem Siedebereich von 60 bis 250°C, welche sorgfältig von Sauerstoff, Schwefelverbindungen und Feuchtigkeit befreit werden muß, oder gesättigte aliphatische und cycloaliphatische Kohlenwasserstoffe wie Butan, Pentan, Hexan, Heptan, Cyclohexan, Methylcyclohexan oder bei $TiCl_3$-haltigen Katalysatoren auch Aromaten, wie Benzol, Toluol und Xylol. Die Suspensionspolymerisation kann auch vorteilhaft unter Verwendung des zur polymerisierenden 1-Olefins als Dispergiermittel, zum Beispiel in flüssigem Propylen, durchgeführt werden.

Eine weitere Verfahrensweise besteht darin, daß die Polymerisation in Abwesenheit eines Lösemittels in der Gasphase unter Vorlage eines zuvor gebildeten Polymeren, zum Beispiel in einem Wirbelbett, durchgeführt wird.

Das Molekulargewicht wird, fall notwendig, durch Zugabe von Wasserstoff geregelt.

Der Vorteil des erfindungsgemäßen Verfahrens besteht darin, daß ohne jeglichen Anfall von überschüssigem Titanhalogenid und von Waschlaugen in einem Verfahrensschritt ein Katalysator hergestellt wird, dessen Aktivität genügend hoch ist, um einen Verbleib der Katalysatorreste im Polymeren zu erlauben. Die Stereospezifiät des Katalysators, das Schüttgewicht und der Feinkornanteil des gebildeten Polymeren entsprechen ebenfalls den Anforderungen an ein modernes Katalysatorsystem.

## Beispiel 1

### 1.1 Herstellung der Katalysatorkomponente A

79,2 g (0,83 Mol) $MgCl_2$ (Wassergehalt 0,05 - 1 Gew.-%), 6,5 g (0,043 Mol) Benzoesäureethylester und 12,6 ml n-Heptan werden in einer Kugelschwingmühle mit einem Volumen von 0,7 l, welche 2,1 kg Kugeln aus V4A-Stahl mit einem Durchmesser von 15 mm enthält, vermahlen. Der Füllkoeffizient liegt bei 135 g/l des Gesamtvolumens. Die Mahltemperatur stellt sich zwischen 40 und 70°C ein. Die Mahldauer beträgt zunächst 6 h. Danach werden 7,89 g (0,042 Mol) $TiCl_4$ hinzugegeben und weitere 40 h gemahlen. Die Füllung der Mühle mit den zu vermahlenden Produkten, das Mahlen und die Entnahme der Katalysatorkomponente aus dem Mahlgefäß erfolgt unter Argon-Atmosphäre.

### 1.2 Polymerisation im flüssigen Monomeren

In einem 16 l-Rührautoklaven werden unter Ausschluß von Luft und Feuchtigkeit bei Raumtemperatur 0,2 bar $H_2$ vorgelegt und mittels einer Druckschleuse folgende Komponenten zudosiert: 40 mMol $Al(C_2H_5)_3$ in 3,2 l flüssigem Propylen, 12,6 mMol 4-Methylbenzoesäuremethyl-ester in 3,2 l flüssigem Propylen und anschließend 5,2 ml einer Suspension der Katalysatorkomponente A (= 0,1 mMol Ti) in 6,2 l flüssigem Propylen. Die Polymerisation setzt nach wenigen Sekunden ein, der Kesselinhalt wird durch eine automatische Regelung langsam auf 70°C gebracht und dann bei dieser Temperatur gehalten. Der Kesseldruck beträgt 29 bar. Nach einer Polymerisationsdauer von 1 h wird auf Raumtemperatur abgekühlt und das restliche Propylen verdampft. Das Polymerisat wird im Vakuumschrank bei 70°C getrocknet. Es werden 1 770 g Polypropylen erhalten, was einer Kontaktausbeute von 370 kg PP/g Ti entspricht. Das Polymerisat besitzt eine Schüttdichte von 450 g/l und eine Kugeldruckhärte von 68 N/mm².

**Beispiel 2**

**Polymerisation in Suspension in einer Dieselölfraktion**

Ein 1,5 l Rührautoklav wird unter Propylengas mit 750 ml Dieselölfraktion (Siedebereich 135 - 170°C) gefüllt. Dann werden nacheinander 6,5 mMol Triethylaluminium in 6 ml Dieselölfraktion und 2,0 mMol 4-Methylbenzoesäuremethylester in 2 ml Dieselöl und 95,8 mg (= 0,04 mMol Ti) Katalysatorkomponente 1.1 suspendiert in 10 ml Dieselölfraktion unter Schutzgas zugegeben. Der Propylen-Druck wird auf 7 bar, die Temperatur auf 70°C eingestellt. Die Rührgeschwindigkeit beträgt 1 000 Upm, die Polymerisationsdauer 2 h. Nach beendeter Polymerisation wird der Autoklav entspannt und das Polymere heiß abfiltriert. Das Polymere wird im Vakuumschrank bei 70°C getrocknet. Die Ausbeute beträgt 410 g (= 214 kg PP/g Ti). Das Filtrat wird im Rotationsverdampfer zur Trockne eingeengt und ergibt nach Auswaage des Rückstandes 10,1 g lösliche Anteile (= 2,4 %). Das Polymere besitzt eine Schüttdichte von 420 g/l und eine Kugeldruckhärte von 75 N/mm$^2$.

**Beispiel 3**

**Polymerisation in der Gasphase**

In einem liegenden 20 l-Reaktor mit wandgängigem Rührer werden unter Ausschluß von Luft und Feuchtigkeit 0,3 kg eines zuvor hergestellten Polypropylenpulvers vorgelegt. Dann drückt man 0,08 bar H$_2$ auf und erwärmt auf 50°C. Mittels einer Druckschleuse werden jetzt 40 mMol AlEt$_3$, 12,6 mMol 4-Methylbenzoesäuremethylester und 4,6 ml einer Suspension der Katalysatorkomponente 1.1 (= 0,1 mMol Ti) in jeweils 0,5 l flüssigem Propylen zudosiert. Nach Einsetzen der Polymerisation läßt man die Temperatur auf 70°C ansteigen und hält den Innendruck durch laufendes Nachdrücken von Propylen bei 23 bar. Nach einer Polymerisationsdauer von 1 h wird der Reaktor abgekühlt und entspannt. Das Polymerisat wird durch ein Bodenventil entnommen und bei 70°C im Vakuum getrocknet. Ausbeute 1 410 g Polypropylen (ohne das eingesetzte Polypropylen) entsprechend einer Kontaktausbeute von 295 kg PP/g Ti, Schüttdichte 410 g/l Kugeldruckhärte 67 N/mm$^2$.

**Vergleichsversuch A**

84 g (0,89-Mol) MgCl$_2$, 6,9 g (0,046 Mol) Benzoesäureethylester und nach 6 h zusätzlich 8,55 g (0,045 Mol) TiCl$_4$ werden ohne n-Heptan analog Beispiel 1.1 gemahlen.
Die Polymerisation erfolgt analog Beispiel 1.2. Die Ergebnisse sind in Tabelle 1 zusammengefaßt.

**Vergleichsversuch B**

54 g der Katalysatorkomponente gemäß Beispiel 1.1 werden 6 h bei 60 - 70°C Temperatur des Heizbades bei einem Druck von 0,1 mm Hg (ca. 0,1 mbar) getrocknet. Der n-Heptan-Gehalt der Katalysatorkomponente sinkt von 6 Gew.-% auf weniger als 0,6 Gew.-%.
Die Polymerisation erfolgt analog Beispiel 1.2. Die Ergebnisse sind in Tabelle 1 zusammengefaßt.

**Beispiel 4**

83,2 g (0,87 Mol) MgCl$_2$, 6,75 g (0,045 Mol) Benzoesäureethylester und 10 ml Dieselölfraktion werden in einer Kugelschwingmühle 6 h gemahlen (Mahlbedingungen wie in Beispiel 1.1). Dann werden 8,36 g (0,044 Mol) TiCl$_4$ hinzugegeben und weitere 40 h gemahlen.
Die Polymerisation erfolgt analog Beispiel 1.2. Die Ergebnisse sind in Tabelle 2 zusammengefaßt.

**Vergleichsversuch C**

129,5 g (1,36 Mol) MgCl$_2$, 10,65 g (0,71 Mol) Benzoesäureethylester und 5 ml Dieselölfraktion und nach 6 h zusätzlich 12,9 g (0,068 Mol) TiCl$_4$ werden analog Beispiel 1.1 gemahlen.
Die Polymerisation erfolgt analog Beispiel 1.2. Die Ergebnisse sind in Tabelle 2 zusammengefaßt.

**Beispiel 5**

93,6 g (0,98 Mol) $MgCl_2$ und 7,95 g (0,053 Mol) Benzoesäureethylester werden in einer Kugelschwingmühle 3 h gemahlen (Mahlbedingungen siehe Beispiel 1.1). Dann werden 15 ml Dieselölfraktion zugegeben und 3 h gemahlen. Danach wird nach Zugabe von 9,3 g $TiCl_4$ noch 40 h gemahlen.

Die Polymerisation erfolgt analog Beispiel 1.2. Es werden 2 110 g Polypropylen erhalten, was einer Kontaktausbeute von 440 kg PP/g Ti entspricht. Das Polymerisat besitzt eine Schüttdichte von 460 g/l und eine Kugeldruckhärte von 68 $N/mm^2$.

**Beispiel 6**

**Propylen-Ethylen-Copolymerisation**

In einem 70 l-Rührautoklaven werden unter Ausschluß von Luft und Feuchtigkeit bei Raumtemperatur 50 l Flüssigpropylen und 0,5 bar Wasserstoff vorgelegt und die Katalysatorkomponente (mit insgesamt 100 ml Dieselölfraktion verdünnt) aus einer Schleuse in folgender Reihenfolge und in folgenden Mengen zugegeben: 40 mMol Aluminiumtriethyl, 12,6 mMol p-Toluylsäuremethylester und 0,15 mMol (bezogen auf Ti) der Katalysatorkomponente A aus Beispiel 5.

Der Kesselinhalt wird durch Wärmezufuhr innerhalb von 15 min auf eine Temperatur von 70°C gebracht und dann bei dieser Temperatur gehalten. Der Kesseldruck beträgt 30 bar. Nach einer Polymerisationsdauer von 50 min wird innerhalb von 5 min auf 60°C abgekühlt und 20 min lang ständig soviel Ethylen zugeführt, daß der Gesamtdruck 35 bar beträgt. Die Gesamtmenge des eingeleiteten Ethylens beträgt 2 250 Nl. Dann wird durch Verdampfen des Ethylens und Propylens abgekühlt und der Kesseldruck dadurch auf 16 bar eingestellt. Bei Raumtemperatur wird das Flüssigpropylen über ein Kerzenfilter vom Polymerisat abgetrennt. Das Polymerisat wird anschließend mit 30 l frischem Flüssigpropylen nochmals 30 min bei Raumtemperatur gerührt und wiederum über ein Filter abgetrennt. Es werden nach Trocknen im Vakuumtrockenschrank 2 525 g Polymerisat erhalten, das entspricht einer Kontaktausbeute von 351 kg/g Ti. Das Polymerisat besitzt eine Schüttdichte von 354 g/l und einen Schmelzindex MFI 230/5 von 7,6 g/min. Die Kugeldruckhärte liegt bei 50 $N/mm^2$. Das so erhaltene Polymerisat enthält 22,6 Gew.-% polymerisiertes Ethylen. Die beiden Flüssigpropylen-Mutterlaugen enthalten noch 81 g lösliche Polymeranteile.

**Beispiel 7**

92,1 g (0,96 Mol) $MgCl_2$ und 10,05 g (0,067 Mol) Benzoesäureethylester werden in einer Kugelschwingmühle 6 h gemahlen (Mahlbedingungen siehe Beispiel 1.1). Dann werden 12,2 g (0,064 Mol) $TiCl_4$ in 10 ml Dieselölfraktion gelöst zugegeben und weitere 40 h gemahlen.

In einem 1,5 l Stahlautoklaven werden 750 ml Dieselölfraktion 5 mMol Triethylaluminium und 0,01 mMol (bezogen auf Ti) der Katalysatorkomponente A gegeben. Anschließend werden bei einer Polymerisationstemperatur von 85°C 3 bar $H_2$ und 4 bar Ethylen aufgedrückt. Das Ethylen wird in der Menge nachdosiert, daß ein Gesamtdruck von 7 bar aufrechterhalten wird. Nach 5 h wird der Versuch abgebrochen. Das Polyethylen wird durch Filtration abgetrennt und im Vakuumtrockenschrank getrocknet. Es werden 100 g Polymerisat erhalten. Das entspricht einer Kontaktausbeute von 4,9 kg Polymeres/g Katalysatorfeststoff oder 10 kg Polymeres/mMol Ti. Das Polymerisat besitzt eine Schüttdichte von 320 g/l, einen Schmelzindex MFI 230/5 vom 6,46 g/10 min und einen S-Wert $\left( \dfrac{MFI-15}{MFI-5} \right)$

$= 6,0.$

**Beispiel 8**

**8.1 Herstellung der Katalysatorkomponente A**

94,5 g (0,99 Mol) $MgCl_2$ (Wassergehalt 0,05 - 1 Gew.-%), 15,0 g (0,1 Mol) Benzoesäureethylester werden in einer Kugelschwingmühle mit einem Volumen von 0,7 l, welche 2,1 kg Kugeln aus V4A-Stahl mit einem Durchmesser von 15 mm enthält, vermahlen. Die Mahltemperatur stellt sich zwischen 40 und 70°C ein. Die Mahldauer beträgt zunächst 3 h. Danach werden 6 ml Dieselölfraktion zugegeben und 3 Stunden gemahlen. Nach Zugabe von 6,6 g (0,05 Mol) wasserfreiem $AlCl_3$ wird noch 20 Stunden und nach Zugabe von 9,4 g (0,05 Mol) $TiCl_4$ weitere 20 Stunden gemahlen. Die Füllung der Mühle mit den zu vermahlenden Produkten, das Mahlen und die Entnahme der Katalysatorkomponente aus dem Mahlgefäß erfolgt unter Argon-Atmosphäre.

## 8.2 Polymerisation im flüssigen Monomeren

In einem 16 l-Rührautoklaven werden unter Ausschluß von Luft und Feuchtigkeit bei Raumtemperatur 0,2 bar $H_2$ vorgelegt und mittels einer Druckschleuse folgende Komponenten zudosiert: 40 mMol $Al(C_2H_5)_3$ in 3,2 l flüssigem Propylen, 12,6 mMol 4-Methylbenzoesäuremethyl-ester in 3,2 l flüssigem Propylen und anschließend 5,2 ml einer Suspension der Katalysatorkomponente A (= 0,1 mMol Ti) in 6,2 l flüssigem Propylen. Die Polymerisation setzt nach wenigen Sekunden ein, der Kesselinhalt wird durch eine automatische Regelung langsam auf 70°C gebracht und dann bei dieser Temperatur gehalten. Der Kesseldruck beträgt 29 bar. Nach einer Polymerisationsdauer von 1 h wird auf Raumtemperatur abgekühlt und das restliche Propylen verdampft. Das Polymerisat wird im Vakuumschrank bei 70°C getrocknet. Die Polymerisationsergebnisse sind in der Tabelle 3 aufgeführt.

### Beispiel 9

94 g (0,99 Mol) $MgCl_2$ und 14,9 g (0,10 Mol) Benzoesäureethylester werden in einer Kugelschwingmühle 3 Stunden gemahlen (Mahlbedingungen siehe Beispiel 8.1). Dann werden 6 ml Dieselölfraktion zugegeben und 3 Stunden gemahlen. Danach wird nach Zugabe von 6,6 g (0,05 Mol) $PCl_3$ noch 20 Stunden und nach Zugabe von 9,1 g (0,05 Mol) $TiCl_4$ weitere 20 Stunden gemahlen.
Die Polymerisation erfolgt analog Beispiel 8.2. Die Polymerisationsergebnisse sind in der Tabelle 3 aufgeführt.

### Beispiel 10

51,3 g (0,54 Mol) $MgCl_2$ und 8,4 g (0,06 Mol) Benzoesäureethylester werden in einer Kugelschwingmühle 3 Stunden gemahlen (Mahlbedingungen siehe Beispiel 8.1). Dann werden 4 ml Dieselölfraktion zugegeben und 3 Stunden gemahlen. Nach Zugabe von 7,0 g (0,03 Mol) Zinntetrachlorid wird noch 20 Stunden und nach Zugabe von 5,1 g (0,03 Mol) $TiCl_4$ weitere 20 Stunden gemahlen.
Die Polymerisation erfolgt analog Beispiel 8.2. Die Polymerisationsergebnisse sind in der Tabelle 3 aufgeführt.

### Beispiel 11

56,8 g (0,60 Mol) $MgCl_2$ und 9,3 g (0,06 Mol) Benzoesäureethylester werden in einer Kugelschwingmühle 3 Stunden gemahlen (Mahlbedingungen siehe Beispiel 8.1). Dann werden 4 ml Dieselölfraktion zugegeben und 3 Stunden gemahlen. Danach wird nach Zugabe von 5,0 (0,03 Mol) Siliciumtetrachlorid noch 20 Stunden und nach Zugabe von 5,7 g (0,03 Mol) $TiCl_4$ weitere 20 Stunden gemahlen.
Die Polymerisation erfolgt analog Beispiel 8.2. Die Polymerisationsergebnisse sind in der Tabelle 3 aufgeführt.

### Beispiel 12

58,2 g (0,61 Mol) $MgCl_2$ und 4,9 g (0,03 Mol) Benzoesäureethylester werden in einer Kugelschwingmühle 3 Stunden gemahlen (Mahlbedingungen siehe Beispiel 8.1). Danach werden 4 ml Dieselölfraktion zugegeben und 3 Stunden gemahlen. Darauf wird nach Zugabe von 13,7 g (0,03 Mol) des Komplexes aus Antimonpentachlorid und Benzoesäureethylester noch 20 Stunden und nach Zugabe von 5,8 g (0,04 Mol) $TiCl_4$ weitere 20 Stunden gemahlen.
Die Polymerisation erfolgt analog Beispiel 8.2. Die Polymerisationsergebnisse sind in der Tabelle 3 aufgeführt.

### Beispiel 13

98,7 g (1,04 Mol) $MgCl_2$ und 16,2 g (0,11 Mol) Benzoesäureethylester werden in einer Kugelschwingmühle 3 Stunden gemahlen (Mahlbedingungen siehe Beispiel 8.1). Dann werden 6 ml Dieselölfraktion zugegehen und 3 h gemahlen. Nach Zugabe von 14,0 g (0,05 Mol) Niobpentachlorid wird noch 20 Stunden und nach Zugabe von 9,8 g (0,05 Mol) $TiCl_4$ weitere 20 Stunden gemahlen.
Die Polymerisation erfolgt analog Beispiel 8.2. Die Polymerisationsergebnisse sind in der Tabelle 3 aufgeführt.

**0 071 957**

**Tabelle 1**

| Beispiel bzw. Versuch | Heptange- halt der Katalysator- Komponente A | Katalysator- ausbeute (kg PP/g Ti) | Schütt- dichte (g/l) | Kugel- druck- härte (N/mm²) | Luft- Strahl- Sieb- analyse 50 µm |
|---|---|---|---|---|---|
| 1.2 | 6 Gew.-% | 370 | 450 | 70 | 2,0 % |
| A | 0 Gew.-% | 260 | 220 | 61 | 1,1 % |
| B | 0,6 Gew.-% | 360 | 280 | 70 | 1,3 % |

**Tabelle 2**

| Beispiel bzw. Versuch | Dieselölfraktion Zusatz zum Mahlgut Gew.-% | Katalysator- ausbeute (kg PP/g Ti) | Schütt- dichte (g/l) | Kugel- druck- härte (N/mm²) | Luft- Strahl- Sieb- analyse 50 µm |
|---|---|---|---|---|---|
| A | 0 ml | 260 | 220 | 61 | 1,1 % |
| C | 5 ml | 320 | 370 | 67 | 2,5 % |
| 4 | 10 ml (14 Gew.-%) | 380 | 400 | 67 | 0,6 % |

**Tabelle 3**

| Beispiel | Ausbeute | Kontakt- ausbeute (kg PP/G Ti) | Schütt- gewicht (g/l) | Kugeldruck- härte (N/mm²) |
|---|---|---|---|---|
| 8 | 2 270 | 474 | 425 | 77 |
| 9 | 1 840 | 385 | 430 | 83 |
| 10 | 2 470 | 516 | 430 | 73 |
| 11 | 2 060 | 431 | 420 | 80 |
| 12 | 1 200 | 250 | 360 | 83 |
| 13 | 1 400 | 293 | 390 | 83 |

**Patentansprüche**

1. Verfahren zum Polymerisieren von 1-Olefinen der Formel $R^3$-CH$=$CH$_2$, worin $R^3$ Wasserstoff oder einem Alkylrest mit 1 bis 8 Kohlenstoffatomen bedeutet, oder zum Copolymerisieren dieser 1-Olefinen untereinander in Gegenwart eines Mischkatalysators, der hergestellt wurde durch Modifizieren eines Magnesiumhalogenids mit einem Elektronendonator, Inberührungbringen des modifizierten Trägers mit einer halogenhaltigen Titanverbindung und Mischen der so gewonnenen Katalysatorkomponente A mit einer halogenfreien aluminiumorganischen Verbindung (Komponente B) und einem Stereoregulator (Komponente C), dadurch gekennzeichnet, daß man die Polymerisation in Gegenwart eines Mischkatalysators durchführt, dessen Komponente A in der Weise hergestellt wurde, daß zunächst das Magnesiumhalogenid mit dem Elektronendonator 1 bis 100 Stunden vermahlen wurde, wobei das Molverhältnis 40:1 bis 5:1 betrug, sodann eine chlorhaltige Titanverbindung zugesetzt und der Ansatz weitere 5 bis 100 Stunden vermahlen wurde, wobei dem Mahlgut 1 bis 20 Gew.-%, bezogen auf die Gesamtmenge des Mahlgutes, eines inerten Kohlenwasserstoffs zugesetzt wurde.

2. Verfahren nach Anspruch 1, dadurch gekennzeichnet, daß man dem Mahlgut ein Säurehalogenid eines Elements der Gruppen III, IV und V des Periodensystems im Molverhältnis Säurehalogenid zu Titan von 0,1 bis 100 zusetzte.

3. Verfahren zur Herstellung eines Polymerisationskatalysators durch Modifizieren eines

**0 071 957**

Magnesiumhalogenids mit einem Elektronendonator, Inberührungbringen des modifizierten Trägers mit einer halogenhaltigen Titanverbindung und Mischen der so gewonnenen Katalysatorkomponente A mit einer halogenfreien aluminiumorganischen Verbindung (Komponente B) und einem Stereoregulator (Komponente C),

dadurch gekennzeichnet, daß zur Herstellung der Komponente A zunächst das Magnesiumhalogenid mit dem Elektronendonator 1 bis 100 Stunden vermahlen wird. sodann eine chlorhaltige Titanverbindung zugesetzt und der Ansatz weitere 5 bis 100 Stunden vermahlen wird, wobei das Molverhältnis 40:1 bis 5:1 beträgt, wobei dem Mahlgut 1 bis 20 Gew.-%, bezogen auf die Gesamtmenge des Mahlgutes, eines inerten Kohlenwasserstoffs zugesetzt wird.

4. Verfahren nach Anspruch 3, dadurch gekennzeichnet, daß man dem Mahlgut ein Säurehalogenid eines Elements der Gruppen III, IV und V des Periodensystems im Molverhältnis Säurehalogenid zu Titan von 0,1 bis 100 zusetzt.

5. Verwendung des nach Anspruch 4 hergestellten Polymerisationskatalysators zum Polymerisieren von 1-Olefinen der Formel $R^3$-CH $=$ CH$_2$, worin $R^3$ Wasserstoff oder einen Alkylrest mit 1 bis 8 Kohlenstoffatomen bedeutet.

### Claims

1. A process for the polymerization of 1-olefins of the formula $R^3$-CH $=$ CH$_2$, wherein $R^3$ denotes hydrogen or an alkyl radical having 1 to 8 carbon atoms, or for the copolymerization of these 1-olefins with one another in the presence of a mixed catalyst, which has been prepared by modification of a magnesium halide with an electron donor, bringing the modified support into contact with a halogen-containing titanium compound and mixing the catalyst component A thus obtained with a halogen-free organoaluminum compound (component B) and a stereoregulator (component C),which process comprises carrying out the polymerization in the presence of a mixed catalyst, the component A of which has been prepared in a manner such that the magnesium halide was initially milled with the electron donor for 1 to 100 hours, the molar ratio being 40:1 to 5:1, then a chlorinecontaining titanium compound was added and the batch was milled for a further 5 to 100 hours, 1 to 20% by weight, relative to the total amount of the material in the mill,of an inert hydrocarbon having been added to the material in the mill.

2. The process as claimed in claim 1, wherein an acid halide of an element of groups III, IV and V of the periodic table is added to the material in the mill in a molar ratio of acid halide to titanium of 0.1 to 100.

3. A process for the preparation of a polymerization catalyst by modification of a magnesium halide with an electron donor, bringing the modified support into contact with a halogen-containing titanium compound and mixing the catalyst component A thus obtained with a halogenfree organoaluminum, compound (component B) and a stereoregulator (component C), which process comprises, for the preparation of the component A, initially milling the magnesium halide with the electron donor for 1 to 100 hours the molar ratio being 40:1 to 5:1, then adding a chlorine-containing titanium compound and milling the batch for a further 5 to 100 hours, 1 to 20% by weight, relative to the total amount of the material in the mill, of an inert hydrocarbon being added to the material in the mill.

4. The process as claimed in claim 3, wherein an acid halide of an element of groups III, IV and V of the periodic table is added to the material in the mill in a molar ratio of acid halide to titanium of 0.1 to 100.

5. The use of the polymerization catalyst prepared as claimed in claim 4 for the polymerization of 1-olefins of the formula $R^3$-CH $=$ CH$_2$, wherein $R^3$ denotes hydrogen or an alkyl radical having 1 to 8 carbon atoms.

### Revendications

1. Procédé pour polymériser des α-oléfines répondant à la formule $R^3$-CH $=$ CH$_2$ dans laquelle $R^3$ désigne l'hydrogène ou un radical alkyle contenant de 1 à 8 atomes de carbone, ou pour copolymériser de telles α-oléfines entre elles, en présence d'un catalyseur mixte préparé par modification d'un halogénure de magnésium avec un donneur d'électrons, mise en contact du support modifié avec un composé halogéné du titane et mélangeage de la composante catalytique A ainsi obtenue avec un composé organoaluminique dépourvu d'halogène (composante B) et un stéréorégulateur (composante C), procédé caractérisé en ce qu'on effectue la polymérisation en présence d'un catalyseur mixte dont on a préparé la composante A en broyant d'abord l'halogénure de magnésium avec un donneur d'électrons pendant 1 à 100 heures, le rapport molaire étant compris entre 40:1 et 5:1, puis en ajoutant un composé chloré du titane et en broyant pendant encore 5 à 100 heures, la matière à broyer ayant été additionnée de 1 à 20 % en poids, par rapport à la quantité totale de la matière en question, d'un hydrocarbure inerte.

2. Procédé selon la revendication 1 caractérisé en ce qu'on ajoute à la matière à broyer un halogénure d'acide dérivant d'un élément d'un des groupes III, IV et V de la classification périodique, le rapport molaire de l'halogénure d'acide au titane étant compris entre 0,1 et 100.

3. Procédé de préparation d'un catalyseur de polymérisation par modification d'un halogénure de

9

magnésium avec un donneur d'électrons, mise en contact du support modifié avec un composé halogéné du titane et mélangeage de la composante catalytique A ainsi obtenue avec un composé organoaluminique dépourvu d'halogène (composante B) et un stéréorégulateur (composante C), procédé caractérisé en ce que, pour préparer la composante A, on broie d'abord l'halogénure de magnésium avec le donneur d'électrons pendant 1 à 100 heures, le rapport molaire étant compris entre 40:1 et 5:1, puis on ajoute un composé chloré du titane et on broie le mélange pendant encore 5 à 100 heures, un hydrocarbure inerte ayant été ajouté à la matière à broyer en une proportion de 1 à 20 % en poids par rapport à l'ensemble de la matière à broyer.

4. Procédé selon la revendication 3 caractérisé en ce qu'on ajoute à la matière à broyer un halogénure d'acide dérivant d'un élément d'un des groupes III, IV et V de la classification périodique, le rapport molaire de l'halogénure d'acide au titane étant compris entre 0,1 et 100.

5. Application du catalyseur de polymérisation préparé selon la revendication 4 à la polymérisation d'$\alpha$-oléfines répondant à la formule $R^3$-CH$=$CH$_2$ dans laquelle $R^3$ représente l'hydrogène ou un radical alkyle contenant de 1 à 8 atomes de carbone.